(19) Europäisches Patentamt
European Patent Office
Office européen des brevets

(11) EP 3 905 412 B1

(12) **EUROPEAN PATENT SPECIFICATION**

(45) Date of publication and mention of the grant of the patent:
**09.08.2023 Bulletin 2023/32**

(21) Application number: **20848419.6**

(22) Date of filing: **16.07.2020**

(51) International Patent Classification (IPC):
***H01M 10/0568*** *(2010.01)* ***H01M 10/052*** *(2010.01)*
***H01M 10/0569*** *(2010.01)* ***H01M 4/587*** *(2010.01)*
*H01M 4/02* *(2006.01)*

(52) Cooperative Patent Classification (CPC):
**H01M 10/0569; H01M 4/587; H01M 10/052; H01M 10/0568;** H01M 2004/027; H01M 2300/0028; Y02E 60/10; Y02P 70/50

(86) International application number:
**PCT/CN2020/100291**

(87) International publication number:
**WO 2021/017759 (04.02.2021 Gazette 2021/05)**

(54) **LITHIUM-ION BATTERY AND RELATED BATTERY MODULE, BATTERY PACK, AND DEVICE**

LITHIUM-IONEN-BATTERIE UND ENTSPRECHENDES BATTERIEMODUL, BATTERIEPACK UND VORRICHTUNG

BATTERIE LITHIUM-ION ET MODULE DE BATTERIE, BLOC-BATTERIE ET DISPOSITIF ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2019 CN 201910695499**

(43) Date of publication of application:
**03.11.2021 Bulletin 2021/44**

(73) Proprietor: **Contemporary Amperex Technology Co., Limited**
**Jiaocheng District**
**Ningde City**
**Fujian 352100 (CN)**

(72) Inventors:
- **LIANG, Chengdu**
**Ningde City, Fujian 352100 (CN)**
- **LI, Zhiqiang**
**Ningde City, Fujian 352100 (CN)**
- **HAN, Changlong**
**Ningde City, Fujian 352100 (CN)**

(74) Representative: **Gong, Jinping**
**CocreateIP**
**Eggenfeldenerstraße 56**
**81929 München (DE)**

(56) References cited:
**CN-A- 103 594 735**
**CN-A- 104 617 333**
**CN-A- 106 711 504**
**CN-A- 109 301 326**
**CN-A- 109 904 521**
**CN-A- 109 935 780**
**JP-A- 2000 315 522**
**JP-A- 2010 129 449**
**US-A1- 2018 331 393**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

This application claims priority to the Chinese Patent Application No. CN201910695499.5, filed on July 30, 2019 and entitled "LITHIUM-ION BATTERY".

## TECHNICAL FIELD

This application relates to the field of battery technologies, and in particular, to a lithium-ion battery, and related battery module, battery pack, and apparatus.

## BACKGROUND

Since the mass production of lithium-ion batteries at the end of the $20^{th}$ century, lithium-ion batteries have been widely used in the field of consumer electronics due to their advantages such as high specific energy, no memory effect, and long cycle life. In recent years, the situation of global environmental protection has become increasingly severe, and shortage of fossil fuels has become more serious. Therefore, with the continuous development of materials and processes, lithium-ion batteries, as a clean energy source, have gradually become an important source of power for automobiles.

Most of commonly used traction batteries use lithium iron phosphate or lithium nickel manganese cobalt oxide ternary material as positive electrode active materials. Lithium iron phosphate with stable structure and low activity can provide high safety and long cycle life, but its energy density is often unable to meet the requirement for an increasing driving range of electric cars because of low plateau and specific energy. The lithium nickel manganese cobalt oxide ternary material combines advantages of lithium nickelate, lithium cobalt oxide, and lithium manganate, with obvious advantages in life and energy density. However, the ternary material is not structurally stable enough, and is alkaline. Consequently, in an electrolyte with lithium hexafluorophosphate as the main salt, its safety performance is difficult to guarantee due to the influence of trace HF therein, and thermal runaway is very easy to occur during thermal shock. Compared with lithium hexafluorophosphate, lithium bis(fluorosulfonyl)imide (LiFSI) has a lower F element content and better thermal stability, and can provide excellent battery safety. However, excessive LiFSI content can easily cause the battery's high voltage resistance performance to deteriorate. US 20180331393 A1 describes an electrolyte system for a lithium metal secondary battery and a lithium metal secondary battery.

## SUMMARY

In view of the disadvantages in the prior art, an objective of this application is to provide a lithium-ion battery with high voltage resistance performance to resolve the prior-art problem.

In order to achieve the above and other related objectives, according to a first aspect, this application provides a lithium-ion battery, including a positive electrode plate, a negative electrode plate, a separator, and an electrolyte, where the negative electrode plate includes a negative electrode active material layer containing a negative electrode active material, and the electrolyte includes an electrolyte lithium salt. The electrolyte lithium salt includes a first lithium salt, where the first lithium salt is selected from fluorine-containing sulfonimide lithium salts, and the first lithium salt and the negative electrode plate satisfy the following relation (1):

$$0.6 \le \frac{M_E \times C_I}{\frac{M_A}{PD_A} \times P_A} \le 6.2 \quad (1)$$

where $M_E$ is a total mass of the electrolyte in the lithium-ion battery, measured in g;
Ci is a mass percentage of the first lithium salt with respect to the electrolyte, measured in %;
$M_A$ is a total mass of the negative electrode active material layer in the lithium-ion battery, measured in g;
$PD_A$ is a compacted density of the negative electrode active material layer, measured in g/$cm^3$; and
$P_A$ is a porosity of the negative electrode active material layer, measured in %.

According to a second aspect, this application provides a battery module, including the lithium-ion battery

according to the first aspect of this application.

According to a third aspect of this application, this application provides a battery pack, including the battery module according to the second aspect of this application.

According to a fourth aspect of this application, this application further provides an apparatus, including the lithium-ion battery according to the first aspect of this application.

Compared with the prior art, this application has the following beneficial effects:

In this application, the electrolyte in which a fluorine-containing sulfonimide lithium salt is used as the first lithium salt is used, and the amount of fluorine-containing sulfonimide lithium salt that can be accommodated per unit volume of pores in the negative electrode plate is controlled to be in a specific range, which can effectively prevent the battery impedance from increasing too fast or the concentration polarization from becoming too large, and take full advantage of high temperature resistance and high electrical conductivity of the fluorine-containing sulfonimide lithium salt. The battery thus prepared has a relatively low increase rate of physical resistance in floating charge, so that safety problems such as lithium plating generated in the mid-late stage of cycling can be avoided, and the battery finally achieves high safety performance, long cycle life, and good high-temperature storage performance.

## **BRIEF** DESCRIPTION OF DRAWINGS

FIG. 1 is a schematic diagram of an embodiment of a lithium-ion battery according to this application.
FIG. 2 is an exploded schematic diagram of an embodiment of a lithium-ion battery according to this application.
FIG. 3 is a schematic diagram of an embodiment of a battery module.
FIG. 4 is a schematic diagram of an embodiment of a battery pack.
FIG. 5 is an exploded diagram of FIG. 4.
FIG. 6 is a schematic diagram of an embodiment of an apparatus using a lithium-ion battery as a power supply according to this application.

Reference signs are described as follows:

1. battery pack
2. upper box body
3. lower box body
4. battery module
5. lithium-ion battery
51. housing
52. electrode assembly
53. cover plate.

## DESCRIPTION OF EMBODIMENTS

To make the objectives, technical solutions, and advantages of this application more comprehensible, the following describes this application in detail with reference to embodiments and accompanying drawings. It should be understood that the specific embodiments described herein are merely used to explain this application but are not intended to limit this application.

In the descriptions of this specification, it should be noted that "more than" or "less than" is inclusive of the present number and that "more" in "one or more" means two or more than two, unless otherwise specified.

Unless otherwise specified, terms used in this application have well-known meanings generally understood by persons skilled in the art. Unless otherwise specified, numerical values of parameters mentioned in this application may be measured by using various measurement methods commonly used in the art (for example, testing may be performed by using a method provided in the embodiments of this application).

### Lithium-ion battery

The following describes in detail the lithium-ion battery according to this application.

A first aspect of this application provides a lithium-ion battery (also known as a lithium-ion secondary battery), including a positive electrode plate, a negative electrode plate, a separator, and an electrolyte, where the negative electrode plate includes a negative electrode active material layer containing a negative electrode active material, and the electrolyte includes an electrolyte lithium salt. The electrolyte lithium salt includes a first lithium salt, where the first

lithium salt is selected from fluorine-containing sulfonimide lithium salts, and the first lithium salt and the negative electrode plate satisfy the following relation (1):

$$0.6 \le \frac{M_E \times C_I}{\frac{M_A}{PD_A} \times P_A} \le 6.2 \quad (1)$$

where $M_E$ is a total mass of the electrolyte in the lithium-ion battery, measured in g; $C_I$ is a mass percentage of the first lithium salt with respect to the electrolyte, measured in %; $M_A$ is a total mass of the negative electrode active material layer in the lithium-ion battery, measured in g; $PD_A$ is a compacted density of the negative electrode active material layer, measured in g/cm$^3$; and $P_A$ is a porosity of the negative electrode active material layer, measured in %.

In this application, to solve the safety risks that trace HF in the electrolyte may bring to ternary materials, a lithium salt containing a relatively low percentage of F element serves as a main salt of the electrolyte. Fluorine-containing sulfonimide lithium salts contain a relatively low percentage of F element, have good thermal stability, and generate less HF, thereby effectively suppressing gas production of positive electrode materials, and providing excellent battery safety. In addition, an electrolyteformulated from a fluorine-containing sulfonimide lithium salt has higher electrical conductivity than a lithium hexafluorophosphate electrolyte, and shows obvious advantages in both cycling and storage life.

In the lithium-ion battery provided in this application, a too high concentration of the fluorine-containing sulfonimide lithium salt in the electrolyte may cause higher viscosity and poorer fluidity of the electrolyte, which affects wide application of the material in lithium-ion batteries. Therefore, in this application, based on micro-structural features of the negative electrode plate, the amount of fluorine-containing sulfonimide lithium salt that can be accommodated per unit volume of pores in the negative electrode active material layer is adjusted to be in a specific range, and fluidity of the fluorine-containing sulfonimide lithium salt in the negative electrode active material layer is controlled by adjusting the liquid retention capacity of the negative electrode active material layer, thereby effectively suppressing rapid consumption of the quite safe electrolyte, preventing the battery impedance from increasing too fast or the concentration polarization from becoming too large, and avoiding safety problems such as lithium plating generated in the mid-late stage of cycling.

In some embodiments of this application, the fluorine-containing sulfonimide lithium salt contained per unit volume of pores in the negative electrode active material layer may be 0.6 g/cm$^3$ to 6.2 g/cm$^3$, 0.6 g/cm$^3$ to 1.0 g/cm$^3$, 1.0 g/cm$^3$ to 1.5 g/cm$^3$, 1.5 g/cm$^3$ to 2.0 g/cm$^3$, 2.0 g/cm$^3$ to 2.5 g/cm$^3$, 2.5 g/cm$^3$ to 3.0 g/cm$^3$, 3.0 g/cm$^3$ to 3.5 g/cm$^3$, 3.5 g/cm$^3$ to 4.0 g/cm$^3$, 4.0 g/cm$^3$ to 4.5 g/cm$^3$, 4.5 g/cm$^3$ to 5.0 g/cm$^3$, 5.0 g/cm$^3$ to 5.5 g/cm$^3$, 5.5 g/cm$^3$ to 6.0 g/cm$^3$, or 6.0 g/cm$^3$ to 6.2 g/cm$^3$.

In the lithium-ion battery provided in this application, the fluorine-containing sulfonimide lithium salt is a lithium salt with a chemical structure formula shown in Formula I:

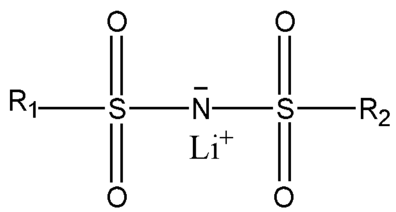

Formula I

where $R_1$ and $R_2$ each may be independently selected from a fluorine atom or a fluorinated hydrocarbyl group having 1 to 8 carbon atoms, and at least one of $R_1$ and $R_2$ includes fluorine. Preferably, $R_1$ and $R_2$ each may be independently selected from $-C_aH_bF_c$ or $-CF_2CF_2(OCF_2CF_2)_dF$, where a is 0, 1, 2, 3, 4, 5, 6, 7 or 8, b and c are integers, b+c = 2a+1, and d is 1, 2 or 3. More preferably, a is 0, 1, 2, 3 or 4. For example, $R_1$ and $R_2$ each may be independently selected from a fluorine atom, $-CH_3$, $-CHF_2$, - $CH_2F$, $-CF_3$, $-C_2F_5$, $-C_3F_7$, $-C_4F_9$, or $-CF_2CF_2OCF_2CF_3$.

In some preferable embodiments of this application, the fluorine-containing sulfonimide lithium salt may be selected from one or more of lithium bis(fluorosulfonyl)imide (LiFSI), lithium fluorosulfonyl (trifluoromethanesulfon)imide, lithium bistrifluoromethanesulfonimide (LiTFSI), lithium methyl trifluoromethanesulfonimide, lithium fluoromethyl (pentafluoroethyl) sulfonimide, and lithium bis(pentafluoroethyl)sulfonimide. Most preferably, the fluorine-containing sulfonimide lithium salt may include lithium bis(fluorosulfonyl)imide, or the fluorine-containing sulfonimide lithium salt may be

selected from lithium bis(fluorosulfonyl)imide.

In the lithium-ion battery provided in this application, with respect to the total mass $C_l$ of the electrolyte, the mass percentage of the first lithium salt (that is, the fluorine-containing sulfonimide lithium salt, LiFSI) may be 4.0 wt% or above, preferably, may be 5.0 wt% or above, or more preferably, may be 5.5 wt% or above. In this application, due to structural characteristics of the fluorine-containing sulfonimide lithium salt itself, the fluorine-containing sulfonimide lithium salt has high electrical conductivity at normal temperature, and more stable than the conventional lithium salt ($LiPF_6$), and less sensitive to water and temperature. Therefore, the fluorine-containing sulfonimide lithium salt in this application has high chemical stability and electrochemical stability, and may be used to improve the stability and power performance of the electrolyte. In this application, the relative percentage of the fluorine-containing sulfonimide lithium salt contained in the electrolyte falling within the foregoing ranges may prevent viscosity of the electrolyte from increasing too high while efficiently improving ionic conductivity performance of the electrolyte.

In the lithium-ion battery provided in this application, the electrolyte lithium salt may further include a second lithium salt. The second lithium salt may be selected from one or more of inorganic lithium salts and organic lithium salts. In some embodiments of this application, the second lithium salt may be selected from one or more of $LiPF_6$, $LiBF_4$, $LiSbF_6$, $LiAsF_6$, $LiClO_4$, and $LiB(C_2O_4)_2$, more preferably, the second lithium salt may be selected from one or more of $LiPF_6$, $LiBF_4$, $LiPO_2F_2$, and $Li_3POF$, or in particular preferably, the second lithium salt may include $LiPF_6$, or the second lithium salt may be selected from $LiPF_6$.

The applicants have discovered through research that when an inorganic fluorine-containing lithium salts used as the second lithium salt is firstly charged, a part of the lithium salt is decomposed to produce fluorine ions, and the fluorine ions react with aluminum foil to form an aluminum fluoride passivation layer, suppressing corrosion of the aluminum foil. It has been found through research that when the amount of an inorganic fluorine-containing lithium salt contained in total lithium salts is greater than 10 mol% (molar ratio), corrosion of aluminum foil can be effectively suppressed. However, when the inorganic fluorine-containing lithium salt is used as the main lithium salt, or its content is too high, the film-forming effect at the cathode is not good, thereby deteriorating the gas production problem during high-temperature storage. Therefore, when the fluorine-containing sulfonimide lithium salt serves as the first lithium salt, and the inorganic fluorine-containing lithium salt serves as the second lithium salt, balance can be struck between electrical conductivity of the electrolyte and corrosion of the aluminum foil. In some embodiments of this application, a molar ratio of the first lithium salt to the second lithium salt may range from 1:1 to 20:1, more preferably, may range from 1.2:1 to 10:1, or in particular preferably, may range from 6:4 to 9:1. For example, the molar ratio of the first lithium salt to the second lithium salt may range from 2:1 to 7:3, from 7:3 to 3:1, from 3:1 to 4:1, from 4:1 to 5:1, from 5:1 to 6:1, from 6:1 to 7:1, or from 7:1 to 8:1.

In some preferable embodiments of this application, a total concentration of the lithium salts in the electrolyte may range from 0.5 mol/L to 2.0 mol/L, from 0.5 mol/L to 0.6 mol/L, from 0.6 mol/L to 0.7 mol/L, from 0.7 mol/L to 0.8 mol/L, from 0.8 mol/L to 0.9 mol/L, from 0.9 mol/L to 1.0 mol/L, from 1.0 mol/L to 1.1 mol/L, from 1.1 mol/L to 1.2 mol/L, from 1.2 mol/L to 1.3 mol/L, from 1.3 mol/L to 1.4 mol/L, from 1.4 mol/L to 1.5 mol/L, from 1.5 mol/L to 1.6 mol/L, from 1.6 mol/L to 1.7 mol/L, from 1.7 mol/L to 1.8 mol/L, from 1.8 mol/L to 1.9 mol/L, or from 1.9 mol/L to 2.0 mol/L, and further preferably may range from 0.6 mol/L to 1.8 mol/L, from 0.7 mol/L to 1.7 mol/L, or from 0.8 mol/L to 1.5 mol/L.

In the lithium-ion battery provided in this application, the electrolyte may further include an additive. Oxidation potential of the additive included in the electrolyte may be suitable for forming a relatively stable passivation film on a positive electrode surface, and while the passivation film is formed, under the driving of the potential, a dense protective film can be formed on the aluminum foil, which improves corrosion resistance of the aluminum foil, and helps to improve safety performance and long-term cycling performance of the lithium-ion battery. In some embodiments of this application, the additive may be selected from one or more of fluoroethylene carbonate, lithium difluorophosphate, lithium difluoroacetate borate, or lithium difluorobisoxalate phosphate.

In the lithium-ion battery provided in this application, the electrolyte may include an organic solvent. The organic solvent is usually used as a solvent to form an electrolyte system. The organic solvent included in the electrolyte may be various organic solvents suitable for an electrolyte of a lithium-ion battery in the art. For example, the organic solvent may be one or more of dimethyl carbonate (DMC), diethyl carbonate (DEC), dipropyl carbonate (DPC), ethyl methyl carbonate (EMC), methyl propyl carbonate (MPC), ethylene propyl carbonate (EPC), vinyl ethylene carbonate (VEC), ethylene carbonate (EC), propylene carbonate (PC), $\gamma$-butyrolactone (GBL), butylene carbonate (BC), fluoroethylene carbonate (FEC), methylmethyl formate (MF), ethyl formate, methyl acetate (MA), ethyl acetate (EA), propyl acetate (PA), methyl propionate (MP), ethyl propionate (EP), propyl propionate (PP), methyl butyrate (MB), ethyl butyrate (EB), sulfolane (SF), methyl sulfonyl methane (MSM), methyl ethyl sulfone (EMS), diethyl sulfone (ESE), tetrahydrofuran (THF), and propylene sulfite. In some preferable embodiments of this application, when the non-aqueous organic solvent includes a cyclic carbonate (cyclic carbonate), the percentage of the cyclic carbonate contained is not greater than 10 wt%. The cyclic carbonate may include five-membered, six-membered, seven-membered cyclic carbonates, and macrocyclic carbonates with more than seven members, and specifically may be one or more of vinyl ethylene carbonate (VEC), ethylene carbonate (EC), propylene carbonate (PC), butylene carbonate (BC), and fluoroethylene carbonate

(FEC). This is because when a high concentration of a fluorine-containing sulfonimide lithium salt is included in the electrolyte, if the organic solvent is a cyclic carbonate, too many of cyclic carbonates may cause side reactions of the electrolyte at the cathode to increase and an obvious increase of gas production, leading to the safety problem and the gas production problem during cycling of the lithium-ion battery.

In the lithium-ion battery provided in this application, the negative electrode plate usually includes a negative current collector and a negative electrode active material layer on a surface of the negative current collector, and the negative electrode active material layer usually includes a negative electrode active material. The negative electrode active material may be various negative electrode active materials suitable for lithium-ion batteries in the art. For example, the negative electrode active material may include one or more of artificial graphite and natural graphite. Preferably, the negative electrode active material may further include one or more of a mesocarbon microbead (MCMB), hard carbon, soft carbon, silicon, a silicon-carbon composite, SiO, a Li-Sn alloy, a Li-Sn-O alloy, Sn, SnO, $SnO_2$, spinel-structure lithium titanate $Li_4Ti_5O_{12}$, a Li-Al alloy, and metal lithium. The negative current collector may be a material such as a metal foil material or a porous metal plate. For example, metal suitable for the negative current collector may be copper, nickel, titanium, iron, and other metals, or their alloys.

In the lithium-ion battery provided in this application, the negative electrode active material layer may further include an electrically conductive agent, a binder, a thickener, and the like. If necessary, a solvent or other additives may also be included in the negative electrode plate. The electrically conductive agent, the binder, and the thickener in the negative electrode active material layer may be various materials suitable for lithium-ion batteries, and may be selected by persons skilled in the art according to an actual need. For example, the electrically conductive agent may be one or more of graphite, superconducting carbon, acetylene black, carbon black, Ketjen black, a carbon dot, a carbon nanotube, graphene, and carbon nanofiber; for another example, the binder may be one or more of styrene butadiene rubber (SBR), polyvinylidene fluoride (PVDF), polytetrafluoroethylene (PTFE), polyvinyl butyral (PVB), water-based acrylic resin (water-based acrylic resin), and carboxymethyl cellulose (CMC); and for a further example, the thickener may be carboxymethyl cellulose (CMC) or the like.

In the lithium-ion battery provided in this application, the compacted density and the porosity of the negative electrode active material layer usually are required to be within appropriate ranges, thereby ensuring the lithium-ion battery has a relatively high volume energy density, and that the amount of compression deformation on particles of the negative electrode active material is relatively low. This is beneficial to rapid infiltration of the electrolyte into pores in the negative electrode plate. In some preferable embodiments of this application, the compacted density $PD_A$ of the negative electrode active material layer may range from 1.5 g/cm$^3$ to 2.1 g/cm$^3$, from 1.5 g/cm$^3$ to 1.6 g/cm$^3$, from 1.6 g/cm$^3$ to 1.65 g/cm$^3$, from 1.65 g/cm$^3$ to 1.7 g/cm$^3$, from 1.7 g/cm$^3$ to 1.8 g/cm$^3$, from 1.8 g/cm$^3$ to 1.9 g/cm$^3$, from 1.9 g/cm$^3$ to 2.0 g/cm$^3$, or from 2.0 g/cm$^3$ to 2.1 g/cm$^3$, or preferably, from 1.5 g/cm$^3$ to 1.65 g/cm$^3$. In other preferable embodiments of this application, the porosity of the negative electrode plate may range from 10% to 50%, from 10% to 15%, from 15% to 18%, from 18% to 20%, from 20% to 24%, from 24% to 26%, from 26% to 30%, from 30% to 34%, from 34% to 37%, from 37% to 38%, from 38% to 42%, from 42% to 46%, or from 46% to 50%, or more preferably, from 15% to 37%.

After a lithium-ion battery is fully charged, theoretically, the charging process is terminated, but in reality, battery voltage gradually decreases due to internal self-discharge of the battery. Floating charge is to continuously charge the lithium-ion battery with a small current to keep the battery fully charged. When the lithium-ion battery is continuously subjected to floating charge for a long time, the battery is in a highly charged state for a long time. In this case, the electrolyte is more likely to decompose, and a rate at which anions of the fluorine-containing sulfonimide salt corrode the positive current collector also increases under a high voltage, thereby increasing the resistance of the lithium-ion battery and reducing long-term cycling performance and safety performance of the battery.

In the lithium-ion battery provided in this application, an increase rate $\Delta R$ of physical resistance in floating charge reflects a change rate of the physical resistance of the lithium-ion battery before and after floating charge. Specifically, the rate can be calculated by the following method: $\Delta R = (R2-R1)/R1$, where R1 is physical resistance of the lithium-ion battery at 1 kHz, and R2 is physical resistance of the lithium-ion battery at 1 kHz after the lithium-ion battery is charged at a constant current of 1 C to a rated voltage, constant-voltage charged at the rated voltage until the current is 0.1 C, and constant-voltage charged at the rated voltage for 24 hours. In a preferable embodiment of this application, the upper limit of the increase rate $\Delta R$ of physical resistance in floating charge does not exceed 55, more preferably, not exceed 50, and most preferably, not exceed 30.

In the lithium-ion battery provided in this application, the positive electrode plate usually includes a positive current collector and a positive electrode active material layer on a surface of the positive current collector, and the positive electrode active material layer usually includes a positive electrode active material. The positive electrode active material may be selected from various positive electrode active materials suitable for the secondary battery in the art. For example, the positive electrode active material may include but is not limited to a lithium transition metal composite oxide. More specifically, the lithium transition metal composite oxide may include but is not limited to one or more of a lithium iron phosphide, a lithium iron manganese phosphide, a lithium cobalt oxide, a lithium nickel oxide, a lithium

manganese oxide, a lithium nickel manganese oxide, a lithium nickel cobalt manganese oxide, a lithium nickel cobalt aluminum oxide, or a compound obtained by adding other transition metal or non-transition metal to these lithium transition metal oxides. The positive current collector may be a material such as a metal foil material or a porous metal plate. For example, a metal suitable for the positive current collector may be copper, aluminum, and other metals, or their alloys.

In the lithium-ion battery provided in this application, usually a separator is also included. The separator may be of various materials suitable for a separator of a lithium-ion battery in the art, and for example, may include but is not limited to one or more of polyethylene, polypropylene, polyvinylidene fluoride, aramid, polyethylene terephthalate, polytetrafluoroethylene, polyacrylonitrile, polyimide, polyamide, polyester, and a natural fiber.

In the lithium-ion battery provided in this application, the positive electrode plate, the separator, and the negative electrode plate generally may be used to form a battery core of the lithium-ion battery. For example, each of the positive electrode plate, the separator, and the negative electrode plate may be a layer, so may be cut to a target size and then stacked in order, and may be further combined with an electrolyte to form a lithium-ion battery. The positive electrode plate, the separator, and the negative electrode plate may be directly formed as a single-layer laminated battery, and may be further wound to a target size, so as to form a battery core and further form a lithium-ion battery by combining with an electrolyte. However, in a preferable embodiment of this application, the lithium-ion battery is a single-layer laminated battery. Such a battery is easier to operate in a floating charge process, and has lower screening costs. The lithium-ion battery may further include other various components that may be used for a lithium-ion battery. For example, the suitable components may include but are not limited to a packaging case, a tab, an external electrode, and the like.

## Battery module

Next, a battery module according to the second aspect of the present invention is briefly described.

FIG. 3 shows a three-dimensional diagram of a battery module according to an embodiment of the present invention. Referring to FIG. 3, the battery module 4 according to the present invention includes a plurality of battery cells 5, and the plurality of battery cells 5 are arranged along a longitudinal direction.

The battery module 4 may be used as a power supply or an energy storage apparatus. A quantity of the battery cells 5 included in the battery module 4 may be adjusted based on use and capacity of the battery module 4.

## Battery pack

Next, a battery pack according to the third aspect of this application is briefly described.

FIG. 4 shows a three-dimensional diagram of a battery pack according to an embodiment of this application, and FIG. 5 is an exploded diagram of the battery pack shown in FIG. 4.

Referring to FIG. 4 and FIG. 5, the battery pack 1 according to this application includes an upper box body 2, a lower box body 3, and the battery module 4. The upper box body 2 and the lower box body 3 are assembled together to form a space for accommodating the battery module 4. The battery module 4 is disposed in the space formed by the upper box body 2 and the lower box body 3 that are assembled together.

An output electrode of the battery module 4 extends from one or both of the upper box body 2 and the lower box body 3 to supply power to an outside or be charged from the outside.

It should be noted that the quantity and arrangement of the battery modules 4 used in the battery pack 1 may be determined based on an actual need. The battery pack 1 may be used as a power supply or an energy storage apparatus.

## Apparatus

Next, an apparatus according to a fourth aspect of this application is briefly described. The apparatus includes the lithium-ion battery according to the first aspect of this application. The lithium-ion battery may be used as a power supply for the apparatus, or an energy storage unit of the apparatus. The apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

The apparatus of this application uses the lithium-ion battery provided in this application, and therefore has at least the same advantages as the lithium-ion battery.

FIG. 6 shows a schematic diagram of an apparatus using a lithium-ion battery as a power supply according to an embodiment of this application. Just as an example, in FIG. 6, the apparatus that uses battery cells 5 is an electric car. The apparatus that uses battery cells 5 may be any electric vehicles other than electric cars (for example, an electric bus, a tramcar, an electric bicycle, an electric motorbike, an electric scooter, an electric golf cart, and an electric truck), an electric vessel, an electric tool, an electronic device, and an energy storage system.

A lithium-ion battery, a battery module, or a battery pack may be selected for the apparatus according to requirements for using the apparatus.

In another example, the apparatus may be a mobile phone, a tablet computer, a notebook computer, or the like. The apparatus is generally required to be light and thin, and may use a lithium-ion battery as its power supply.

The following describes implementations of this application by using specific examples.

It should be noted that process devices or apparatuses not specifically noted in the following examples all adopt conventional devices or apparatuses in the art.

In addition, it should be understood that the one or more method steps mentioned in this application do not exclude that there may be other method steps before and after the combined steps or that other method steps may be inserted between these explicitly mentioned steps, unless otherwise specified. It should further be understood that the combination and connection relationship between one or more devices/apparatuses mentioned in this application do not exclude that there may be other devices/apparatuses before and after the combined devices/apparatuses or that other devices/apparatuses may be inserted between the two explicitly mentioned devices/apparatuses, unless otherwise specified. Moreover, unless otherwise specified, numbers of the method steps are merely a tool for identifying the method steps, but are not intended to limit the order of the method steps or to limit the implementable scope of the present invention. Alteration or adjustment of their relative relationships without substantial changes in the technical content shall be also considered as the implementable scope of this disclosure.

**Example 1**

Preparation of a positive electrode plate:

$LiNi_{0.8}Co_{0.1}Mn_{0.1}O_2$ as a positive electrode active material, conductive carbon black SP, and a binder PVDF were dispersed into the solvent NMP and well mixed to obtain a positive electrode slurry. The positive electrode slurry was uniformly applied onto a positive current collector aluminum foil, with a coating weight of the positive electrode slurry of 0.309 g/1540.25mm$^2$ (calculated by weight without the solvent). The aluminum foil was dried, cold pressed, slitting, and cut to obtain a positive electrode plate, where a mass ratio of the positive electrode active material to conductive carbon black to the binder PVDF is 96:2:2.

Preparation of a negative electrode plate:

Natural graphite as a negative electrode active material, conductive carbon black SP, a thickener CMC, and a binder SBR were dispersed into the deionized water solvent at a mass ratio of 96:1:1:2 and well mixed to obtain a negative electrode slurry. The negative electrode slurry was uniformly applied onto a negative current collector copper foil which was then dried, cold pressed, slit, and cut. With adjustment, the cold pressing pressure was 120 to 250 tons, a coating weight of the negative electrode slurry was 0.15 g/1540.25 mm$^2$ (calculated by weight without the solvent), and a particle size Dv50 of the negative electrode active material particles was 14 $\mu$m, so a negative electrode plate with a compacted density of 1.5 g/cm$^3$ and a porosity of 30% was obtained. The compacted density of the negative electrode plate can be calculated according to the formula $P = m/v$ (m is the weight of the negative electrode active material layer, measured in g; and v is the volume of the negative electrode active material layer, measured in cm$^3$, and v can be a product of the area and the thickness of the negative electrode active material layer). A true density tester AccuPyc II 1340 can be used to test the porosity of the negative electrode plate by following the instrument manual.

Preparation of an electrolyte:

In a glove box full of argon gas (water content < 10 ppm, oxygen content < 1 ppm), a first lithium salt LiFSI and a second lithium salt $LiPF_6$ were added at a specific molar ratio (the sum of lithium salt concentrations was 1 M) into a non-aqueous organic solvent which was ethylene carbonate or ethyl methyl carbonate, and the percentage of cyclic carbonate (ethylene carbonate) contained was 20 wt%. After the lithium salt was completely dissolved, an appropriate amount of other additives was added and stirred evenly, and an electrolyte with a lithium salt concentration of 1.0 mol/L was obtained.

Preparation of a separator:

A 16-micron polyethylene film (PE) was used as a separator.

Preparation of a lithium-ion battery:

The prepared positive electrode plate, separator, and negative electrode plate were stacked in order, so that the separator was placed between the positive and negative electrode plates to play a role of separating the positive electrode plate from the negative electrode plate, and winding was performed to obtain a bare battery core. After tabs were welded, the bare battery core was placed in an outer package, and the foregoing prepared electrolyte was injected into the dried battery core. The preparation of the lithium-ion battery was completed after packaging, standing, chemical conversion, shaping, capacity test, and the like were performed. The soft-packaged lithium-ion battery was 4.0 mm in thickness, 60 mm in width, and 140 mm in length. In the foregoing soft-packaged lithium-ion battery, a total mass of the negative electrode active material layer was 25 g, and a total mass of the electrolyte was 14 g.

**Examples 2 to 10 and Comparative Examples 1 to 3**

Preparation methods of the positive electrode plates, the negative electrode plates, the electrolytes and the lithium-ion batteries in Examples 2 to 10 and Comparative Examples 1 to 3 were basically the same as those in Example 1, except that a coating weight of the negative electrode slurry, an average particle size of the negative electrode active materials, and manufacturing parameters such as cold pressing pressure were changed, and a total mass $M_A$ and a compacted density $PD_A$ of the negative electrode active material, and a porosity $P_A$ of an electrode plate were adjusted. Formulas and physical parameters of the examples and comparative examples were shown in Table 1.

**Table 1**

| No. | Electrolyte | | | | | | | Negative electrode | | | Form ula 1 |
|---|---|---|---|---|---|---|---|---|---|---|---|
| | First lithium salt material | Mass ratio of first lithium salt (wt%) | Second lithium salt material | Mass ratio of second lithium salt (wt %) | Total mass $M_E$ of electrolyte (g) | Percentage of cyclic carbonate contained | Combination of additives | Total mass $M_A$ of active material layer (g) | Compacted density $PD_A$ | Porosity $P_A$ | $\frac{M_E \times C_1}{\frac{M_A}{PD_A} \times P_A}$ |
| Example 1 | LiFSI | 15.2 | $LiPF_6$ | 5.2 | 14 | 20% | / | 25 | 1.5 | 30% | 2.0 |
| Example 2 | LiFSI | 22.42 | $LiPF_6$ | 2.12 | 20 | 20% | / | 24 | 1.65 | 20% | 6.2 |
| Example 3 | LiFSI | 10.5 | $LiPF_6$ | 8.43 | 14 | 20% | / | 26 | 1.5 | 30% | 1.3 |
| Example 4 | LiFSI | 22.42 | $LiPF_6$ | 2.12 | 14 | 20% | / | 25 | 1.5 | 45% | 1.7 |
| Example 5 | LiFSI | 5.13 | $LiPF_6$ | 9.5 | 14 | 20% | / | 24 | 1.45 | 45% | 0.6 |
| Example 6 | LiFSI | 5.11 | $LiPF_6$ | 9.5 | 20 | 20% | / | 24 | 1.45 | 45% | 0.8 |
| Example 7 | LiFSI | 10.5 | $LiPF_6$ | 8.43 | 14 | 10% | / | 26 | 1.5 | 30% | 1.3 |

(continued)

| No. | Electrolyte | | | | | | | Negative electrode | | | Form ula 1 |
|---|---|---|---|---|---|---|---|---|---|---|---|
| | First lithium salt material | Mass ratio of first lithium salt (wt%) | Second lithium salt material | Mass ratio of second lithium salt (wt %) | Total mass $M_E$ of electrolyte (g) | Percentage of cyclic carbonate contained | Combination of additives | Total mass $M_A$ of active material layer (g) | Compacted density $PD_A$ | Porosity $P_A$ | $\frac{M_E \times C_1}{\frac{M_A}{PD_A} \times P_A}$ |
| Example 8 | LiFSI | 10.5 | $LiPF_6$ | 8.43 | 14 | 10% | Fluoroethylene carbonate | 26 | 1.5 | 30% | 1.3 |
| Example 9 | LiFSI | 10.5 | $LiPF_6$ | 8.43 | 14 | 10% | Lithium difluoroacetate borate | 26 | 1.5 | 30% | 1.3 |
| Example 10 | LiFSI | 10.5 | $LiPF_6$ | 8.43 | 14 | 10% | Lithium difluorophosphate | 26 | 1.5 | 30% | 1.3 |
| Comparative Example 1 | / | / | $LiPF_6$ | 12.9 | 14 | 20% | / | 26 | 1.5 | 30% | 0.0 |
| Comparative Example 2 | LiFSI | 22.42 | $LiPF_6$ | 2.12 | 21 | 20% | / | 24 | 1.65 | 19% | 6.8 |
| Comparative Example 3 | LiFSI | 5.18 | $LiPF_6$ | 9.3 | 13 | 20% | / | 24 | 1.45 | 45% | 0.5 |

Test methods:

(1) Cycling performance test of the lithium-ion secondary battery:

Fresh lithium-ion secondary batteries prepared in the examples and comparative examples were set aside for 5 minutes at 45°C, charged at a constant current rate of 1 C to 4.2 V, constant-voltage charged until the current was less than or equal to 0.05 C, after that, set aside for 5 minutes, and then discharged at a constant current rate of 1 C to 2.8 V This was a charge and discharge cycle, and discharge capacities at this time were recorded as discharge capacities of the first cycle of the lithium-ion secondary batteries. The lithium-ion secondary batteries were charged and discharged for 100 cycles by using the foregoing method, and a discharge capacity of each cycle was recorded.

Capacity retention rate (%) of the lithium-ion secondary battery after 100 cycles under 1 C/1 C at 45°C = (Discharge capacity of the $100^{th}$ cycle/Discharge capacity of the 1st cycle) × 100%

(2) High-temperature storage test of the lithium-ion secondary battery:

Fresh lithium-ion secondary batteries prepared in the examples and comparative examples were set aside for 5 minutes at 25°C, charged at a constant current rate of 1 C to 4.2 V, constant-voltage charged until the current was less than or equal to 0.05 C, after that, set aside for 5 minutes, and then discharged at a constant current rate of 1 C to 2.8 V The discharge capacities were recorded as the initial discharge capacities.

The foregoing lithium-ion secondary batteries were set aside again for 5 minutes, charged at a constant current rate of 1 C to 4.2 V, and constant-voltage charged until the current was less than or equal to 0.05 C. The batteries were placed in an oven at 60°C for one month.

The foregoing lithium-ion secondary batteries were taken out of the oven after the set-aside period. The batteries were cooled to room temperature, set aside for 5 minutes, charged at a constant current rate of 1 C to 4.2 V, constant-voltage charged until the current was less than or equal to 0.05 C, after that, set aside for 5 minutes, and then discharged at a constant current rate of 1 C to 3.0 V The discharge capacities were recorded as the discharge capacities after storage.

Capacity retention rate (%) of the lithium-ion secondary battery after storage at 60°C for one month = (Discharge capacity after storage/Initial discharge capacity) × 100%.

(3) Thermal shock test of the lithium-ion secondary battery:

Fresh lithium-ion secondary batteries prepared in the examples and comparative examples were set aside for 5 minutes at 25°C, charged at a constant current rate of 1 C to 4.2 V, and constant-voltage charged until the current was less than or equal to 0.05 C.

The foregoing lithium-ion secondary batteries were placed in an oven, and the temperature was risen from 25°C to 130°C at a rate of 2°C per minute, and kept for 2 hours. The surface temperatures of the batteries during this period were monitored.

(4) Floating charge and physical resistance tests of the lithium-ion battery:

Physical resistance of a battery including the positive electrode plate to be screened was tested at 1 kHz and recorded as R1. The battery was charged at a constant current of 1 C to 4.2 V, charged at a constant voltage of 4.2 V until the current was 0.1 C, and continued to be charged at a constant voltage of 4.2 V for 24 hours. Its physical resistance at 1 kHz was tested and recorded as R2.

An increase rate of physical resistance of the lithium-ion battery in floating charge $\Delta R = (R2-R1)/R1$.

Performance test results of the examples and comparative examples were shown in Table 2.

**Table 2**

| No. | Increase rate of resistance in floating charge (times) | Highest temperature rise in thermal shock test (°C) | Capacity retention rate after 100 cycles under 1 C/1 C at 45°C (%) | Capacity retention rate after storage for one month under 100% SOC at 60°C (%) |
|---|---|---|---|---|
| Example 1 | 3.31 | 170.1 | 84.8 | 88.2 |
| Example 2 | 5.32 | 169.7 | 84.1 | 90.2 |
| Example 3 | 2.6 | 173.2 | 85.7 | 87.5 |
| Example 4 | 4.53 | 168.5 | 84.2 | 90.6 |
| Example 5 | 2.43 | 175.2 | 86.5 | 86.9 |
| Example 6 | 2.31 | 176.8 | 86.9 | 86.6 |
| Example 7 | 1.72 | 171.9 | 87.2 | 91.3 |
| Example 8 | 1.21 | 172.1 | 87.5 | 91.8 |
| Example 9 | 1.45 | 172.3 | 87.9 | 91.6 |
| Example 10 | 1.1 | 171.6 | 87.8 | 92.3 |
| Comparative Example 1 | 0.07 | 285.3 | 87.1 | 81.5 |
| Comparative Example 2 | 60.1 | 168.8 | 66.7 | 90.1 |
| Comparative Example 3 | 0.06 | 174.7 | 79.2 | 82.1 |

The test results are analyzed in the following.

It can be learned from Examples 1 to 10 that high safety and excellent cycling performance can be finally achieved by injecting the electrolyte with the fluorine-containing sulfonimide lithium salt as the first lithium salt into the cell, and adjusting the amount of the fluorine-containing sulfonimide lithium salt that can be accommodated per unit volume of pores in the negative electrode plate.

It can be learned from Comparative Example 1 and Comparative Example 3, when no fluorine-containing sulfonimide lithium salt is contained in the electrolyte, or the amount of the fluorine-containing sulfonimide lithium salt that can be accommodated per unit volume of pores in the negative electrode plate is too low, side reactions of the lithium-ion batteries at high temperature or in a high fully charged state are intensified, and gas production and heat production of the batteries increase, thereby deteriorating safety and high-temperature cycling and storage.

It can be learned from Comparative Example 2, when the amount of the fluorine-containing sulfonimide lithium salt that can be accommodated per unit volume of pores in the negative electrode plate is too high, viscosity of the prepared electrolyte is relatively high due to a high density of the fluorine-containing sulfonimide lithium salt itself. This drastically reduces the lithium ion transmission effect, and also accelerates the corrosion of the positive current collector aluminum foil, resulting in that the battery polarization is significantly increased, an increase of resistance in floating charge is too large, and the cycle capacity retention rate of the lithium-ion battery is reduced, which is not conducive to making a battery with excellent cycling performance.

It can be further learned from Examples 7 to 9 that the percentage of the organic solvent, preferably, the cyclic carbonate, contained in the electrolyte does not exceed 10 wt%, so as to reduce gas generation caused by the solvent on a positive electrode surface. When characteristic additives such as fluoroethylene carbonate, lithium difluorophosphate, and lithium difluoroacetate borate are further added, the corrosion resistance of the positive electrode aluminum foil surface and film-forming effect are further improved, a resistivity increase of the lithium-ion battery in floating charge is suppressed, and cycling and gas generation problems are alleviated.

In conclusion, this application effectively overcomes various shortcomings in the prior art and has high industrial utilization value.

## Claims

1. A lithium-ion battery, comprising a positive electrode plate, a negative electrode plate, a separator, and an electrolyte, wherein the negative electrode plate comprises a negative electrode active material layer containing a negative electrode active material, and the electrolyte comprises an electrolyte lithium salt, and wherein

   the electrolyte lithium salt comprises a first lithium salt, wherein the first lithium salt is selected from fluorine-containing sulfonimide lithium salts, and
   the first lithium salt and the negative electrode plate satisfy the following relation (1):

$$0.6 \leq \frac{M_E \times C_I}{\frac{M_A}{PD_A} \times P_A} \leq 6.2 \qquad (1)$$

   wherein $M_E$ is a total mass of the electrolyte in the lithium-ion battery, measured in g;
   $C_I$ is a mass percentage of the first lithium salt with respect to the electrolyte, measured in %;
   $M_A$ is a total mass of the negative electrode active material layer in the lithium-ion battery, measured in g;
   $PD_A$ is a compacted density of the negative electrode active material layer, measured in g/cm$^3$; and
   $P_A$ is a porosity of the negative electrode active material layer, measured in %; and, wherein preferably, the fluorine-containing sulfonimide lithium salt per unit volume of pores in the negative electrode active material layer is 0.6 g/cm$^3$ to 6.2 g/cm$^3$.

2. The lithium-ion battery according to claim 1, wherein the fluorine-containing sulfonimide lithium salt is a lithium salt with a chemical structure formula shown in Formula I:

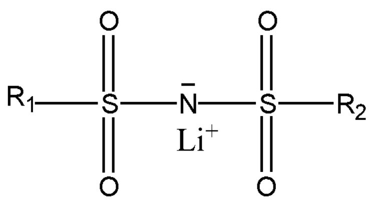

Formula I

   wherein $R_1$ and $R_2$ each may be independently selected from a fluorine atom or a fluorinated hydrocarbyl group having 1 to 8 carbon atoms, and at least one of $R_1$ and $R_2$ comprises fluorine;
   and, wherein preferably, in Formula I, $R_1$ and $R_2$ each may be independently selected from $-C_aH_bF_c$ or $-CF_2CF_2(OCF_2CF_2)_dF$, wherein a is 0, 1, 2, 3, 4, 5, 6, 7 or 8, b and c are integers, b+c = 2a+1, and d is 1, 2 or 3.

3. The lithium-ion battery according to any one of claims 1 to 2, wherein the fluorine-containing sulfonimide lithium salt is selected from one or more of lithium bis(fluorosulfonyl)imide (LiFSI), lithium fluorosulfonyl (trifluoromethanesulfon)imide, lithium bistrifluoromethanesulfonimide (LiTFSI), lithium methyl trifluoromethanesulfonimide, lithium fluoromethyl (pentafluoroethyl) sulfonimide, and lithium bis(pentafluoroethyl)sulfonimide, and
   preferably, the fluorine-containing sulfonimide lithium salt comprises lithium bis(fluorosulfonyl)imide, or the fluorine-containing sulfonimide lithium salt is lithium bis(fluorosulfonyl)imide.

4. The lithium-ion battery according to any one of claims 1 to 3, wherein a mass percentage $C_I$ of the first lithium salt with respect to the electrolyte is ≥ 4.0 wt%, preferably, $C_I \geq 5.0$ wt%, or more preferably, $C_I \geq 5.5$ wt%.

5. The lithium-ion battery according to any one of claims 1 to 4, wherein the electrolyte lithium salt comprises a second lithium salt, and the second lithium salt is selected from one or more of $LiPF_6$, $LiBF_4$, $LiSbF_6$, $LiAsF_6$, $LiClO_4$, and $LiB(C_2O_4)$; and, wherein preferably, a molar ratio of the first lithium salt to the second lithium salt ranges from 1:1 to 20:1, more preferably, from 1.2:1 to 10:1, and in particular preferably from 6:4 to 9:1..

6. The lithium-ion battery according to any one of claims 1 to 4, wherein the electrolyte lithium salt comprises a second lithium salt, and the second lithium salt is selected from an inorganic fluorine-containing lithium salt, and preferably, the second lithium salt is selected from one or more of $LiPF_6$, $LiBF_4$, $LiPO_2F_2$, and $Li_3POF$; and, wherein preferably, a molar ratio of the first lithium salt to the second lithium salt ranges from 1:1 to 20:1, more preferably, from 1.2:1 to 10:1, and in particular preferably from 6:4 to 9:1.

7. The lithium-ion battery according to any one of claims 1 to 6, wherein the electrolyte comprises an organic solvent, and the organic solvent is selected from one or more of dimethyl carbonate (DMC), diethyl carbonate (DEC), dipropyl carbonate (DPC), ethyl methyl carbonate (EMC), methyl propyl carbonate (MPC), ethylene propyl carbonate (EPC), vinyl ethylene carbonate (VEC), ethylene carbonate (EC), propylene carbonate (PC), γ-butyrolactone (GBL), butylene carbonate (BC), fluoroethylene carbonate (FEC), methylmethyl formate (MF), ethyl formate, methyl acetate (MA), ethyl acetate (EA), propyl acetate (PA), methyl propionate (MP), ethyl propionate (EP), propyl propionate (PP), methyl butyrate (MB), ethyl butyrate (EB), sulfolane (SF), methyl sulfonyl methane (MSM), methyl ethyl sulfone (EMS), diethyl sulfone (ESE), tetrahydrofuran (THF), and propylene sulfite.

8. The lithium-ion battery according to any one of claims 1 to 7, wherein cyclic carbonate contained in the organic solvent is no more than 10 wt%.

9. The lithium-ion battery according to any one of claims 1 to 8, wherein the electrolyte further comprises one or more of fluoroethylene carbonate, lithium difluorophosphate, lithium difluoroacetate borate, and lithium difluorobisoxalate phosphate.

10. The lithium-ion battery according to any one of claims 1 to 9, wherein a porosity $P_A$ of the negative electrode active material layer is 10% to 50%; and/or

 a compacted density $PD_A$ of the negative electrode active material layer is 1.5 g/cm$^3$ to 2.1 g/cm$^3$; and/or
 the negative electrode active material comprises one or more of artificial graphite and natural graphite.

11. The lithium-ion battery according to any one of claims 1 to 10, wherein the negative electrode active material further comprises one or more of a mesocarbon microbead (MCMB), hard carbon, soft carbon, silicon, a silicon-carbon composite, SiO, a Li-Sn alloy, a Li-Sn-O alloy, Sn, SnO, $SnO_2$, spinel-structure lithium titanate $Li_4Ti_5O_{12}$, a Li-Al alloy, and metal lithium.

12. The lithium-ion battery according to any one of claims 1 to 11, wherein an increase rate of physical resistance of the lithium-ion battery in floating charge $\Delta R \leq 60$:

$$\Delta R = (R2\text{-}R1)/R1 \qquad (2)$$

wherein R1 is physical resistance of the lithium-ion battery at 1 kHz; and R2 is physical resistance of the lithium-ion battery at 1 kHz after the lithium-ion battery is charged at a constant current of 1 C to a rated voltage, constant-voltage charged at the rated voltage until the current is 0.1 C, and constant-voltage charged at the rated voltage for 24 hours.

13. A battery module, comprising the lithium-ion battery according to any one of claims 1 to 12.

14. A battery pack, comprising the battery module according to claim 13.

15. An apparatus, comprising the lithium-ion battery according to any one of claims 1 to 12;
and, wherein preferably, the apparatus is selected from one or more of an electric vehicle, an electric vessel, an electric tool, an electronic device, and an energy storage system.

**Patentansprüche**

1. Lithiumionenbatterie, umfassend eine positive Elektrodenplatte, eine negative Elektrodenplatte, einen Separatoren einen Elektrolyt, wobei die negative Elektrodenplatte eine Schicht aus Aktivmaterial für negative Elektroden, die ein Aktivmaterial für negative Elektroden enthält, umfasst und der Elektrolyt einen Elektrolyt-Lithiumsalz umfasst, und

wobei

das Elektrolyt-Lithiumsalz ein erstes Lithiumsalz umfasst, wobei das erste Lithiumsalz aus fluorhaltigen Sulfonimid-Lithiumsalzen ausgewählt ist und
das erste Lithiumsalz und die negative Elektrodenplatte die folgende Beziehung (1) erfüllen:

$$0,6 \leq \frac{M_E \times C_I}{\frac{M_A}{PD_A} \times P_A} \leq 6,2 \quad (1)$$

wobei $M_E$ für die Gesamtmasse des Elektrolyts in der Lithiumionenbatterie, gemessen in g, steht;
$C_1$ für den Massenprozentanteil des ersten Lithiumsalzes, bezogen auf den Elektrolyt, gemessen in %, steht;
$M_A$ für die Gesamtmasse der Schicht aus Aktivmaterial für negative Elektroden in der Lithiumionenbatterie, gemessen in g, steht;
$PD_A$ für die Stampfdichte der Schicht aus Aktivmaterial für negative Elektroden, gemessen in $g/cm^3$, steht; und
$P_A$ für die Porosität der Schicht aus Aktivmaterial für negative Elektroden, gemessen in %, steht;
wobei vorzugsweise das fluorhaltige Sulfonimid-Lithiumsalz pro Volumeneinheit von Poren in der Schicht aus Aktivmaterial für negative Elektroden 0,6 $g/cm^3$ bis 6,2/$cm^3$ beträgt.

2. Lithiumionenbatterie nach Anspruch 1, wobei es sich bei dem fluorhaltigen Sulfonimid-Lithiumsalz um ein Lithiumsalz mit einer in Formel I gezeigten chemischen Strukturformel handelt:

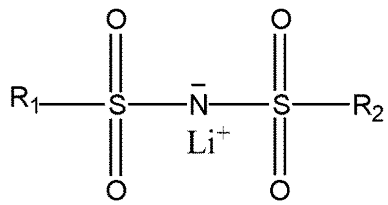

Formel I

wobei $R_1$ und $R_2$ jeweils unabhängig aus einem Fluoratom oder einer fluorierten Hydrocarbylgruppe mit 1 bis 8 Kohlenstoffatomen ausgewählt sind und mindestens eines von $R_1$ und $R_2$ Fluor umfasst;
und wobei vorzugsweise in Formel I $R_1$ und $R_2$ jeweils unabhängig aus $-C_aH_bF_c$ oder $-CF_2CF_2(OCF_2CF_2)_dF$ ausgewählt sein können, wobei a für 0, 1, 2, 3, 4, 5, 6, 7 oder 8 steht, b und c für ganze Zahlen stehen, b+c = 2a+1 und d für 1, 2 oder 3 steht.

3. Lithiumionenbatterie nach einem der Ansprüche 1 bis 2, wobei das fluorhaltige Sulfonimid-Lithiumsalz aus einem oder mehreren von Lithiumbis(fluorsulfonyl)imid (LiFSI), Lithiumfluorsulfonyl(trifluormethansulfon)imid, Lithiumbistrifluormethansulfonimid (LiTFSI), Lithiummethyltrifluormethansulfonimid, Lithiumfluormethyl(pentafluorethyl)sulfonimid und Lithiumbis(pentafluorethyl)sulfonimid ausgewählt ist und
das fluorhaltige Sulfonimid-Lithiumsalz vorzugsweise Lithiumbis(fluorsulfonyl)imid umfasst oder es sich bei dem fluorhaltigen Sulfonimid-Lithiumsalz um Lithiumbis(fluorsulfonyl)-imid handelt.

4. Lithiumionenbatterie nach einem der Ansprüche 1 bis 3, wobei der Massenprozentanteil $C_1$ des ersten Lithiumsalzes, bezogen auf den Elektrolyt, $\geq$ 4,0 Gew.-% ist, vorzugsweise $C_1 \geq$ 5,0 Gew.-% oder weiter bevorzugt $C_1 \geq$ 5,5 Gew.-%.

5. Lithiumionenbatterie nach einem der Ansprüche 1 bis 4, wobei das Elektrolyt-Lithiumsalz ein zweites Lithiumsalz umfasst und das zweite Lithiumsalz aus einem oder mehreren von $LiPF_6$, $LiBF_4$, $LiSbF_6$, $LiAsF_6$, $LiClO_4$ und $LiB(C_2O_4)$ ausgewählt ist und wobei das Molverhältnis von erstem Lithiumsalz zu zweitem Lithiumsalz vorzugsweise im Bereich von 1:1 bis 20:1, weiter bevorzugt von 1,2:1 bis 10:1 und besonders bevorzugt von 6:4 bis 9:1 liegt.

6. Lithiumionenbatterie nach einem der Ansprüche 1 bis 4, wobei das Elektrolyt-Lithiumsalz ein zweites Lithiumsalz umfasst und das zweite Lithiumsalz aus einem anorganischen fluorhaltigen Lithiumsalz ausgewählt ist und das

zweite Lithiumsalz vorzugsweise aus einem oder mehreren von $LiPF_6$, $LiBF_4$, $LiPO_2F_2$ und $Li_3POF$ ausgewählt ist und wobei das Molverhältnis von erstem Lithiumsalz zu zweitem Lithiumsalz vorzugsweise im Bereich von 1:1 bis 20:1, weiter bevorzugt von 1,2:1 bis 10:1 und besonders bevorzugt von 6:4 bis 9:1 liegt.

**7.** Lithiumionenbatterie nach einem der Ansprüche 1 bis 6, wobei der Elektrolyt ein organisches Lösungsmittel umfasst und das organische Lösungsmittel aus einem oder mehreren von Dimethylcarbonat (DMC), Diethylcarbonat (DEC), Dipropylcarbonat (DPC), Ethylmethylcarbonat (EMC), Methylpropylcarbonat (MPC), Ethylenpropylcarbonat (EPC), Vinylethylencarbonat (VEC), Ethylencarbonat (EC), Propylencarbonat (PC), γ-Butyrolacton (GBL), Butylencarbonat (BC), Fluorethylencarbonat (FEC), Methylmethylformiat (MF), Ethylformiat, Methylacetat (MA), Ethylacetat (EA), Propylacetat (PA), Methylpropionat (MP), Ethylpropionat (EP), Propylpropionat (PP), Methylbutyrat (MB), Ethylbutyrat (EB), Sulfolan (SF), Methylsulfonylmethan (MSM), Methylethylsulfon (EMS), Diethylsulfon (ESE), Tetrahydrofuran (THF) und Propylensulfit ausgewählt ist.

**8.** Lithiumionenbatterie nach einem der Ansprüche 1 bis 7, wobei in dem organischen Lösungsmittel nicht mehr als 10 Gew.-% cyclisches Carbonat enthalten sind.

**9.** Lithiumbatterie nach einem der Ansprüche 1 bis 8, wobei der Elektrolyt ferner eines oder mehrere von Fluorethylencarbonat, Lithiumdifluorophosphat, Lithiumdifluoroacetatborat und Lithiumdifluorobisoxalatphosphat umfasst.

**10.** Lithiumionenbatterie nach einem der Ansprüche 1 bis 9, wobei die Porosität $P_A$ der Schicht aus Aktivmaterial für negative Elektroden 10 % bis 50 % beträgt und/oder

die Stampfdichte $PD_A$ der Schicht aus Aktivmaterial für negative Elektroden 1,5 g/cm$^3$ bis 2,1 g/cm$^3$ beträgt und/oder
das Aktivmaterial für negative Elektroden eines oder mehrere von künstlichenm Graphit und natürlichem Graphit umfasst.

**11.** Lithiumionenbatterie nach einem der Ansprüche 1 bis 10, wobei das Aktivmaterial für negative Elektroden ferner eines oder mehrere von Mesokohlenstoff-Mikrokugeln (MCMB), Hartkohle, Weichkohle, Silicium, einem Silicium-Kohlenstoff-Verbundwerkstoff, SiO, einer Li-Sn-Legierung, einer Li-Sn-O-Legierung, Sn, SnO, $SnO_2$, Lithiumtitanat mit Spinellstruktur $Li_4Ti_5O_{12}$, einer Li-Al-Legierung und Lithiummetall umfasst.

**12.** Lithiumionenbatterie nach einem der Ansprüche 1 bis 11, wobei eine Zunahmerate des physikalischen Widerstands der Lithiumionenbatterie bei Erhaltungsladung $\Delta R \leq 60$:

$$\Delta R = (R2-R1)/R1 \quad (2)$$

wobei R1 der physikalische Widerstand der Lithiumionenbatterie bei 1 kHz ist und R2 der physikalische Widerstand der Lithiumionenbatterie bei 1 kHz nach Laden der Lithiumionenbatterie bei einem konstanten Strom von 1 C bis zu einer Nennspannung, Laden mit konstanter Spannung bei der Nennspannung, bis der Strom 0,1 C beträgt, und Laden mit konstanter Spannung bei der Nennspannung über einen Zeitraum von 24 Stunden ist.

**13.** Batteriemodul, umfassend die Lithiumionenbatterie nach einem der Ansprüche 1 bis 12.

**14.** Batteriepack, umfassend das Batteriemodul nach Anspruch 13.

**15.** Apparatur, umfassend die Lithiumionenbatterie nach einem der Ansprüche 1 bis 12;
und wobei die Apparatur vorzugsweise aus einem oder mehreren von einem Elektrofahrzeug, einem Elektroschiff, einem Elektrowerkzeug, einer elektronischen Vorrichtung und einem Energiespeichersystem ausgewählt ist.

## Revendications

**1.** Batterie lithium-ion, comprenant une plaque d'électrode positive, une plaque d'électrode négative, un séparateur, et un électrolyte, la plaque d'électrode négative comprenant une couche de matériau actif d'électrode négative contenant un matériau actif d'électrode négative, et l'électrolyte comprenant un sel de lithium d'électrolyte, et

le sel de lithium d'électrolyte comprenant un premier sel de lithium, le premier sel de lithium étant choisi parmi des sels de lithium de sulfonimide contenant du fluor, et
le premier sel de lithium et la plaque d'électrode négative satisfaisant la relation suivante (1) :

$$0,6 \leq \frac{M_E \times C_I}{\frac{M_A}{PD_A} \times P_A} \leq 6,2 \quad (1)$$

$M_E$ étant une masse totale de l'électrolyte dans la batterie lithium-ion, mesurée en g ;
$C_I$ étant un pourcentage en masse du premier sel de lithium par rapport à l'électrolyte, mesuré en % ;
$M_A$ étant une masse totale de la couche de matériau actif d'électrode négative dans la batterie lithium-ion, mesurée en g ;
$PD_A$ étant une densité compactée de la couche de matériau actif d'électrode négative, mesurée en g/cm$^3$ ; et
$P_A$ étant une porosité de la couche de matériau actif d'électrode négative, mesurée en % ;
et, préférablement, le sel de lithium de sulfonimide contenant du fluor par unité de volume de pores dans la couche de matériau actif d'électrode négative étant de 0,6 g/cm$^3$ à 6,2 g/cm$^3$.

2. Batterie lithium-ion selon la revendication 1, le sel de lithium de sulfonimide contenant du fluor étant un sel de lithium doté d'une formule de structure chimique présentée dans la formule I

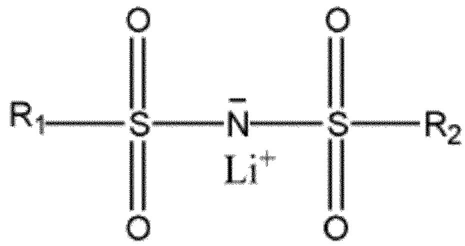

formule I

$R_1$ et $R_2$ pouvant chacun être indépendamment choisis parmi un atome de fluor ou un groupe hydrocarbyle fluoré ayant 1 à 8 atomes de carbone, et au moins l'un parmi $R_1$ et $R_2$ comprenant du fluor ;
et, préférablement, dans la formule I, $R_1$ et $R_2$ pouvant chacun être indépendamment choisis parmi $-C_aH_bF_c$ ou $-CF_2CF_2(OCF_2CF_2)_dF$, a étant 0, 1, 2, 3, 4, 5, 6, 7 ou 8, b et c étant des entiers, b + c = 2a + 1, et d étant 1, 2 ou 3.

3. Batterie lithium-ion selon l'une quelconque des revendications 1 à 2, le sel de lithium de sulfonimide contenant du fluor étant choisi parmi l'un ou plusieurs parmi le bis(fluorosulfonyl)imide de lithium (LiFSI), le fluorosulfonyl(trifluorométhanesulfon)imide de lithium, le bistrifluorométhanesulfonimide de lithium (LiTFSI), le méthyl-trifluorométhanesulfonimide de lithium, le fluorométhyl(pentafluoroéthyl)sulfonimide de lithium et le bis(pentafluoroéthyl)sulfonimide de lithium, et
préférablement, le sel de lithium de sulfonimide contenant du fluor comprenant le bis(fluorosulfonyl)imide de lithium, ou le sel de lithium de sulfonimide contenant du fluor étant le bis(fluorosulfonyl)imide de lithium.

4. Batterie lithium-ion selon l'une quelconque des revendications 1 à 3, un pourcentage en masse $C_I$ du premier sel de lithium par rapport à l'électrolyte étant ≥ 4,0 % en poids, préférablement, $C_I \geq 5,0$ % en poids, ou plus préférablement $C_I \geq 5,5$ % en poids.

5. Batterie lithium-ion selon l'une quelconque des revendications 1 à 4, le sel de lithium d'électrolyte comprenant un deuxième sel de lithium, et le deuxième sel de lithium étant choisi parmi l'un ou plusieurs parmi $LiPF_6$, $LiBF_4$, $LiSbF_6$, $LiAsF_6$, $LiClO_4$, et $LiB(C_2O_4)$ ; et, préférablement, un rapport molaire du premier sel de lithium sur le deuxième sel de lithium se situant dans la plage de 1 : 1 à 20 : 1, plus préférablement, de 1,2 : 1 à 10 : 1, et en particulier préférablement de 6 : 4 à 9 : 1.

6. Batterie lithium-ion selon l'une quelconque des revendications 1 à 4, le sel de lithium d'électrolyte comprenant un deuxième sel de lithium, et le deuxième sel de lithium étant choisi parmi un sel de lithium contenant du fluor inorganique, et préférablement, le deuxième sel de lithium étant choisi parmi l'un ou plusieurs parmi $LiPF_6$, $LiBF_4$, $LiPO_2F_2$, et $Li_3POF$ ; et, préférablement, un rapport molaire du premier sel de lithium sur le deuxième sel de lithium

se situant dans la plage de 1 : 1 à 20 : 1, plus préférablement, de 1,2 : 1 à 10 : 1, et en particulier préférablement de 6 : 4 à 9 : 1.

**7.** Batterie lithium-ion selon l'une quelconque des revendications 1 à 6, l'électrolyte comprenant un solvant organique, et le solvant organique étant choisi parmi l'un ou plusieurs parmi carbonate de diméthyle (DMC), carbonate de diéthyle (DEC), carbonate de dipropyle (DPC), carbonate d'éthyle et de méthyle (EMC), carbonate de méthyle et de propyle (MPC), carbonate d'éthylène et de propyle (EPC), carbonate de vinyle et d'éthylène (VEC), carbonate d'éthylène (EC), carbonate de propylène (PC), γ-butyrolactone (GBL), carbonate de butylène (BC), carbonate de fluoroéthylène (FEC), formiate de méthylméthyle (MF), formiate d'éthyle, acétate de méthyle (MA), acétate d'éthyle (EA), acétate de propyle (PA), propionate de méthyle (MP), propionate d'éthyle (EP), propionate de propyle (PP), butyrate de méthyle (MB), butyrate d'éthyle (EB), sulfolane (SF), méthylsulfonylméthane (MSM), méthyléthylsulfone (EMS), diéthylsulfone (ESE), tétrahydrofuranne (THF) et sulfite de propylène.

**8.** Batterie lithium-ion selon l'une quelconque des revendications 1 à 7, un carbonate cyclique contenu dans le solvant organique étant présent à raison de pas plus de 10 % en poids.

**9.** Batterie lithium-ion selon l'une quelconque des revendications 1 à 8, l'électrolyte comprenant en outre l'un ou plusieurs parmi le carbonate de fluoroéthylène, le difluorophosphate de lithium, le difluoroacétate borate de lithium, et le difluorobisoxalate phosphate de lithium.

**10.** Batterie lithium-ion selon l'une quelconque des revendications 1 à 9, une porosité $P_A$ de la couche de matériau actif d'électrode négative étant de 10 % à 50 % ; et/ou

une densité compactée $PD_A$ de la couche de matériau actif d'électrode négative étant de 1,5 g/cm$^3$ à 2,1 g/cm$^3$ ; et/ou
le matériau actif d'électrode négative comprenant l'un ou plusieurs parmi un graphite artificiel et un graphite naturel.

**11.** Batterie lithium-ion selon l'une quelconque des revendications 1 à 10, le matériau actif d'électrode négative comprenant en outre l'un ou plusieurs parmi une microbille de mésocarbone (MCMB), un carbone dur, un carbone tendre, le silicium, un composite silicium-carbone, SiO, un alliage Li-Sn, un alliage Li-Sn-O, Sn, SnO, $SnO_2$, un titanate de lithium à structure de spinelle $Li_4Ti_5O_{12}$, un alliage Li-Al, et du lithium métal.

**12.** Batterie lithium-ion selon l'une quelconque des revendications 1 à 11, un taux d'augmentation de la résistance physique de la batterie lithium-ion en charge flottante $\Delta R \leq 60$ :

$$\Delta R = (R2-R1)/R1 \qquad (2)$$

R1 étant une résistance physique de la batterie lithium-ion à 1 kHz ; et R2 étant la résistance physique de la batterie lithium-ion à 1 kHz après que la batterie lithium-ion est chargée à un courant constant de 1 C jusqu'à une tension nominale, chargée à tension constante à la tension nominale jusqu'à ce que le courant soit de 0,1 C, et chargée à tension constante à la tension nominale pendant 24 heures.

**13.** Module de batterie, comprenant la batterie lithium-ion selon l'une quelconque des revendications 1 à 12.

**14.** Bloc batterie, comprenant le module de batterie selon la revendication 13.

**15.** Appareil, comprenant la batterie lithium-ion selon l'une quelconque des revendications 1 à 12;
et, préférablement, l'appareil étant choisi parmi l'un ou plusieurs parmi un véhicule électrique, un navire électrique, un outil électrique, un dispositif électronique et un système de stockage d'énergie.

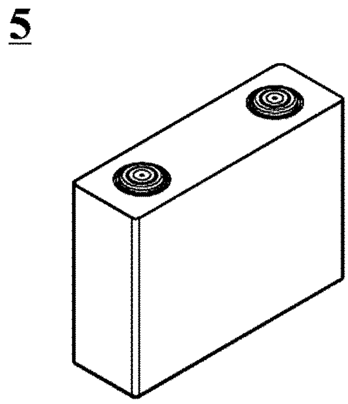


FIG. 1

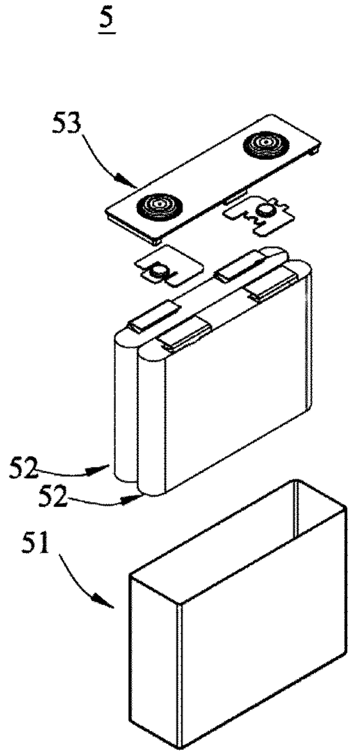


FIG. 2

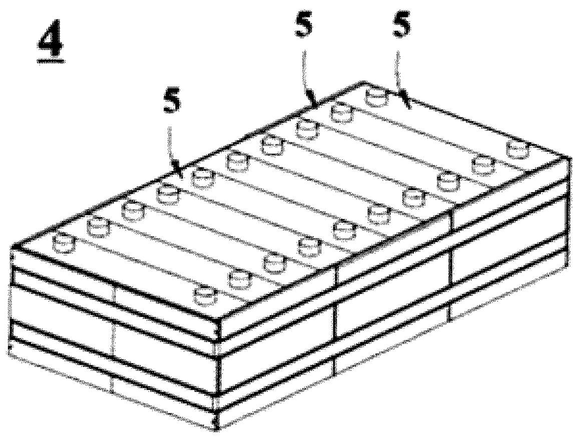


FIG. 3

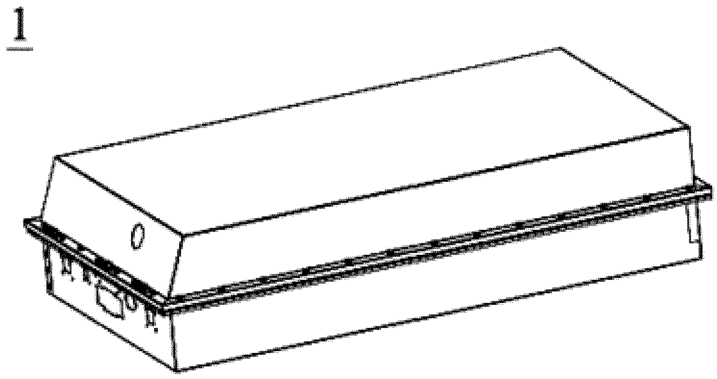


FIG. 4

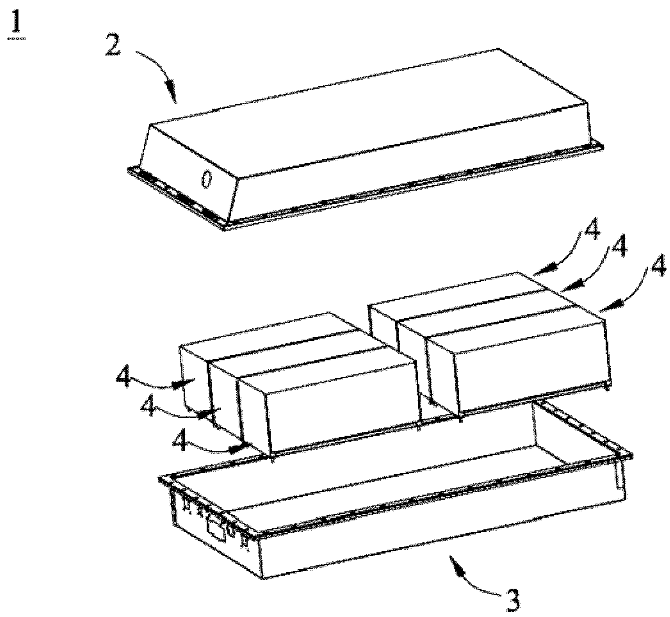


FIG. 5

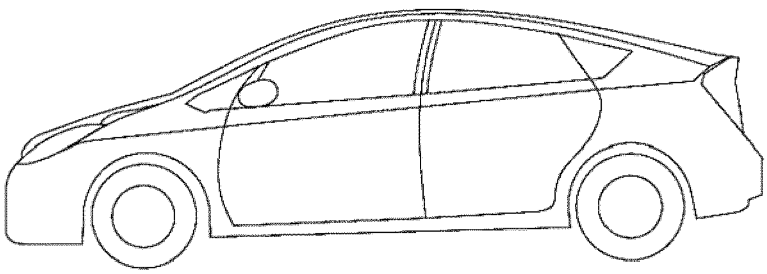

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201910695499
- US 20180331393 A1